# EUROPÄISCHE PATENTANMELDUNG

(11) **EP 1 037 076 A1**
(43) Veröffentlichungstag der Anmeldung: **20.09.2000**
(21) Anmeldenummer: 00104978.2
(22) Anmeldetag: 09.03.2000
(51) Int. Cl.: G02B 6/38

(54) **Kontaktstecker für Lichtwellenleiter zu Steckverbinder-Anordnungen**

(30) Priorität: 17.03.1999 CH 49799
(71) Anmelder: Reichle & De-Massari AG, 8620 Wetzikon (CH)
(72) Erfinder: Reichle, Hans, 8620 Wetzikon (CH)
(74) Vertreter: Petschner, Goetz

(57) **Zusammenfassung**

Der Kontaktstecker für Lichtwellenleiter zu Steckverbinder-Anordnungen, bei welcher der Kontaktstecker zum Zusammenwirken mit einer, Verriegelungsmittel (2) aufweisenden Steckeraufnahme (3), wie Kupplung oder Mittelstück, bestimmt ist, weist das Gehäuse (4) des Kontaktsteckers (1) mindestens einen Führungskanal (9) zur Aufnahme mindestens eines Lichtwellenleiters auf, wobei am Gehäuse (4) des Kontaktsteckers (1) ein Entriegelungsmechanismus (5, 6) angeordnet ist, der zusammen mit dem Gehäuse (4) einstückig ist. Enden ferner beim Kontaktstecker die Kontaktenden der Lichtwellenleiter je in einer Ferrule (8), die vom Gehäuse (4) des Kontaktsteckers (1) umgeben ist, kann die Lichtwellenleiterführung z.B. Ferrule (8) mit dem Gehäuse (4) des Kontaktsteckers (1) ebenfalls einstückig geformt sein.

Aus diesen Massnahmen ergibt sich ein Kontaktstecker mit einer geringsten Anzahl von Teilen; gegebenenfalls lässt sich vollständige Einstückigkeit erreichen.

## Beschreibung

Die vorliegende Erfindung betrifft ein Kontaktstecker für Lichtwellenleiter zu Steckverbinder-Anordnungen, bei welcher der Kontaktstecker zum Zusammenwirken mit einer Verriegelungsklinken aufweisenden Steckeraufnahme, wie Kupplung o. dgl. bestimmt ist und Verwendung in Gehäusen, wie LWL-Dosen und dgl., findet.

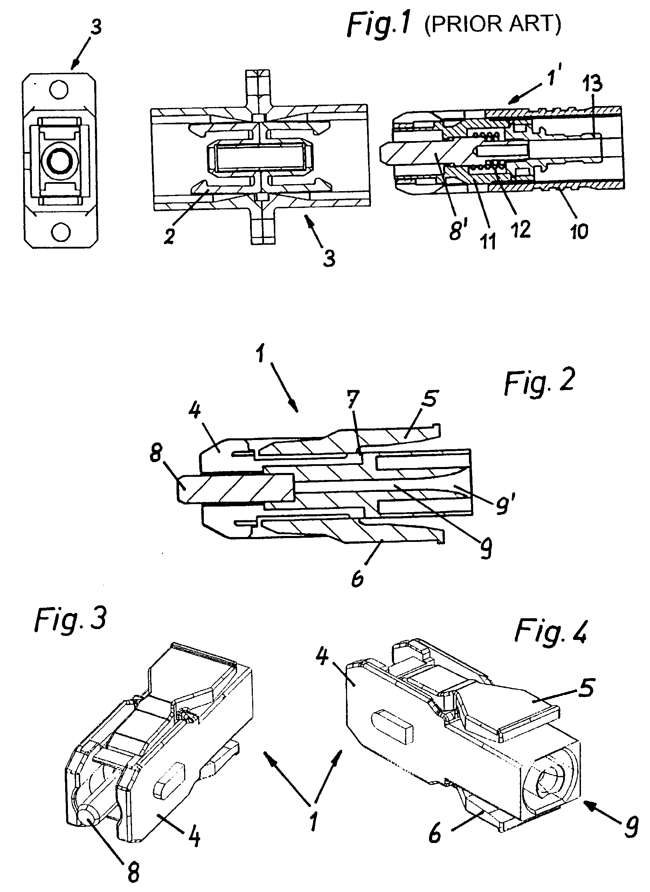

Die beispielhafte SC Steckverbinder-Anordnung, Figur 1, besteht aus einer symmetrisch aufgebauten Kupplung 3 und zwei gleichartige Kontaktstecker 1', deren Lichtwellenleiter in den Ferrulen gehaltert sind und sich im gesteckten Zustand berühren (Kontaktstecker). Der Veriegelungsmechanismus wird normgemäss als 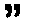 push-pull" bezeichnet. Dieser Mechanismus erlaubt das Verriegeln bzw. Entriegeln der Kontaktstecker in der Kupplung durch stoßen und anschließendes ziehen.

Durch den vermehrten Einsatz von Steckverbinder-Anordnungen in geschlossenen Gehäusen, d.h. an LWL-Dosen, Rangierfeld-Baugruppen und dgl. ist eine symmetrische Anordnung durch zwei gleichartige Kontaktstecker, einer innen, der andere außen am Gehäuse wegen der verschiedenen Funktionalität nicht mehr gegeben.

Auf der Aussenseite des geschlossenen Gehäuses ist ein mit 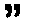 push-pull" Veriegelungsmechanismus ausgestatteter Kontaktstecker, wie durch die Norm definiert, dank seiner manuell leichten Handhabung und der relativ häufigen Steckbarkeit, immer noch erwünscht.

Im Innern des geschlossenen Gehäuses sind die Anforderungen an einen erfindungsgemäßen Kontaktstecker aber verschieden:
- die Steckhäufigkeit ist gering;
- die manuelle Handhabung ist auf wenige Steckzyklen pro Lebensdauer beschränkt;
dagegen sind die Bauform und Grösse des Kontaktsteckers wegen den geringen Innenmasse der Gehäuse von besonderer Bedeutung.

Die Steckbarkeit des Kontaktsteckers wird soweit gewährleistet, dass eine allfällige Verschmutzung der Lichtwellenleiter-Stirnfläche am Kontaktstecker durch eine nachträgliche Reinigung möglich wird. Dabei muss das Gehäuse (LWL-Dose bzw. Rangierfeld-Baugruppe) geöffnet werden um Zugang zum Kontaktstecker zu erhalten.

Es ist deshalb Aufgabe der vorliegenden Erfindung, einen Kontaktstecker für Lichtwellenleiter zu Steckverbinder-Anordnungen zu schaffen, der in bekannter Weise zum Zusammenwirken mit einer, Verriegelungsklinken aufweisenden Steckeraufnahme bestimmt ist, der sich aber durch seine konstruktiv einfachste Bauform und Grösse im Innern von Gehäusen integrieren lässt.

Dies wird erfindungsgemäss zunächst dadurch erreicht, dass das Gehäuse des Kontaktsteckers mindestens einen Führungskanal zur Aufnahme mindestens eines Lichtwellenleiters aufweist, wobei am Gehäuse des Kontaktsteckers ein, zum Zusammenwirken mit den Verriegelungsmitteln der Steckeraufnahme bestimmter Entriegelungsmechanismus angeordnet ist, der zusammen mit dem Gehäuse einstückig ist.

Hierbei kann der Führungskanal in einen erweiterten, einen Knickschutz für die Lichtwellenleiter bildenden Teil ausmünden.
Der Entriegelungsmechanismus ist eine, am Gehäuse des Kontaktsteckers angelenkt und von außen betätigbare Hebelanordnung, die aus mindestens einem zweiarmigen Hebel besteht. Dessen innerer Arm im Verbindungszustand des Kontaktsteckers mit der Steckeraufnahme eine deren Verriegelungsmitteln untergreift, wobei der zweiarmigen Hebel über einen elastischen Steg oder eine elastische Wippe kippbar am Gehäuse angeformt ist.

Enden ferner beim Kontaktstecker die Kontaktenden der Lichtwellenleiter je in einer Lichtwellenleiterführung z.B. Ferrule, die vom Gehäuse des Kontaktsteckers umgeben ist, kann die Lichtwellenleiterführung mit dem Gehäuse des Kontaktsteckers ebenfalls einstückig geformt sein. Im weiteren kann die Lichtwellenleiterführung starr oder gefedert mit dem Gehäuse verbunden sein.

Eine beispielsweise Ausführungsform des Erfindungsgegenstandes ist nachfolgend anhand der Zeichnung näher erläutert. Es zeigen:
- Fig. 1: die normierte SC Steckverbinder-Anordnung für Lichtwellenleiter mit einem zum Zusammenwirken mit einer, Verriegelungsklinken aufweisenden Steckeraufnahme bestimmten SC Kontaktstecker nach dem Stand der Technik, in Draufsicht und im Schnitt;
- Fig. 2: im Schnitt einen erfindungsgemäßen Kontaktstecker für eine Steckverbinder-Anordnung, der in bekannter Weise zum Zusammenwirken mit einer, Verriegelungsmittel aufweisenden Steckeraufnahme gemäss Fig. 1 bestimmt ist;
- Fig. 3 u. 4: in schaubildartiger Darstellung in zwei Ansichten den erfindungsgemäßen Kontaktstecker gemäss Fig. 2
und
- Fig. 5 u. 6: eine Steckverbinder-Anordnung im Schnitt, mit einer Steckeraufnahme und mit einem Kontaktstecker nach dem Stand der Technik (linke Seite) sowie mit einem erfindungsgemäßen Kontaktstecker (rechte Seite) im eingesteckten Zustand, verriegelt resp. entriegelt.

In Fig. 1 ist zunächst beispielsweise eine normierte sogenannte SC Steckverbinder-Anordnung für Lichtwellenleiter dargestellt. Diese SC Steckverbinder-Anordnung besteht aus einer symmetrisch aufgebauten Steckeraufnahme resp. Mittelstück resp. Kupplung 3 und zwei gleichartige Kontaktstecker 1' (nur einer rechtsseitig angedeutet), deren Lichtwellenleiter in Ferrulen gehaltert sind und sich im gesteckten Zustand berühren.
In der Regel umschließt bei solchen bekannten Kontaktsteckern 1' ein Aussengehäuse 10 ein Innengehäuse 11, die genannte Ferrule 8' für den Lichtwellenleiter, einen Ferrulenhalter, eine Feder 12 und eine Crimphals 13, gegebenenfalls noch wenigstens teilweise einen Knickschutz.

Nachteilig hierbei ist, wie einleitend erwähnt, der vielteilige Aufbau der bekannten Kontaktstecker 1' und deren Baugröße.

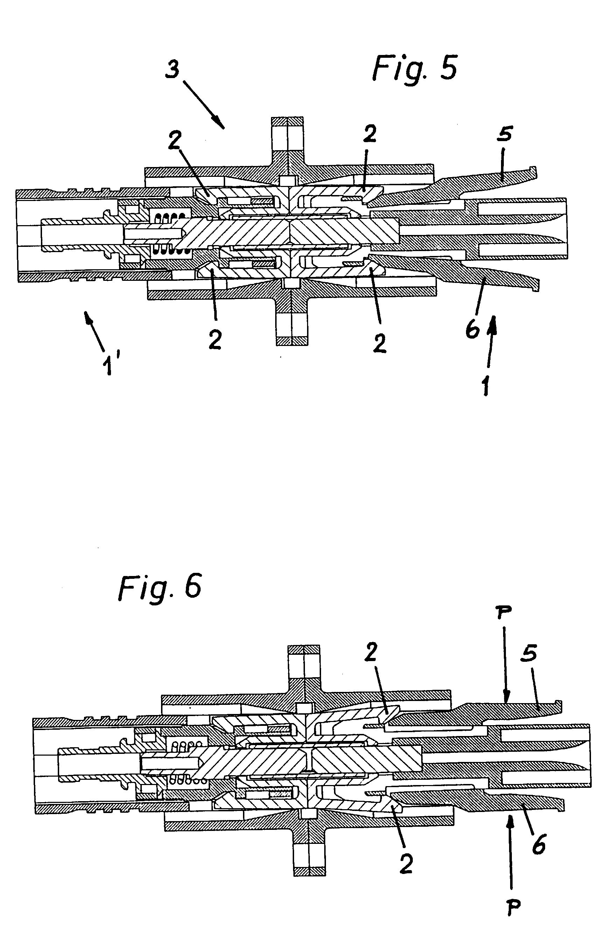

In den Fig. 2 bis 4 und in den Fig. 5 und 6 (rechtsseitig) ist nun ein erfindungsgemäßer Kontaktstecker 1 für die normierte SC Steckverbinder-Anordnung oder aber auch für andere Steckverbinder-Anordnungen gezeigt. Das Gehäuse 4 des Kontaktsteckers 1 ist mit dem Entriegelungsmechanismus 5, 6, und 7 einstückig. Dieser Mechanismus wirkt mit den Verriegelungsmitteln 2 der Steckeraufnahme 3 zusammen.

Um hier nun eine zunächst generelle Vereinfachung im Aufbau des Kontaktsteckers zu erreichen, weist das Gehäuse 4 des erfindungsgemäßen Kontaktsteckers 1 mindestens einen Führungskanal 9 zur Aufnahme mindestens eines hier einklebbaren Lichtwellenleiters auf, der gegebenenfalls in einen erweiterten, einen Knickschutz für die Lichtwellenleiter bildenden Teil 9' ausmündet.

Dieser Entriegelungsmechanismus umfasst hier eine am Gehäuse 4 des Kontaktsteckers 1 angelenkte und von außen betätigbare Hebelanordnung, welche aus zwei zweiarmigen Hebeln 5 und 6 besteht, deren je innerer Arm im Verbindungszustand des Kontaktsteckers 1 mit der Steckeraufnahme 3 eine deren Verriegelungsmittel 2 (Fig. 5 u. 6) untergreift.

Ein Zusammendrücken der freien Hebelenden bewirkt dann ein Ausklinken der Verriegelungsmittel 2 der Steckeraufnahme 3, wie das Fig. 6 deutlich zeigt, wonach der Kontaktstecker 1 dann leicht aus der Steckeraufnahme 3 ausgezogen werden kann.

Die zweiarmigen Hebel 5, 6 des Entriegelungsmechanismus sind dabei je über einen elastischen Steg 7 oder eine elastische Wippe kippbar am Gehäuse 4 des Kontaktsteckers 1 angeformt, wie Fig. 2 erkennen lässt.

Enden bei einem solchen Kontaktstecker 1 die Kontaktenden der Lichtwellenleiter (nicht gezeigt) je in einer Ferrule 8, die vom Gehäuse 4 des Kontaktsteckers 1 umgeben ist, kann die Ferrule 8 mit dem Gehäuse 4 des Kontaktsteckers 1 einstückig geformt sein.

Auf diese Weise ergibt sich ein Kontaktstecker mit einer geringsten Anzahl von Teilen; gegebenenfalls lässt sich sogar vollständige Einstückigkeit erreichen. In dieser angestrebten Einstückigkeit kann jedoch keine Beschränkung in konstruktiver Hinsicht gesehen werden, da es durchaus möglich ist, etwa die Ferrule durch Einschluß entsprechender Mittel federnd zu lagern.

Weiter besteht hier weder eine Beschränkung auf eine besondere Geometrie solcher Kontaktstecker, noch eine Beschränkung auf irgendwelche Materialien.

Wie schon ausgeführt, kann der erfindungsgemäße Kontaktstecker auch als Mehrfachstecker, d.h. mehrere Lichtwellenleiter umfassender Kontaktstecker, ausgebildet sein.

Es wird Schutz beansprucht wie folgt:

## Patentansprüche

1. Kontaktstecker für Lichtwellenleiter zu Steckverbinder-Anordnungen, bei welcher der Kontaktstecker zum Zusammenwirken mit einer, Verriegelungsmittel aufweisenden Steckeraufnahme, wie Kupplung oder Mittelstück, bestimmt ist, dadurch gekennzeichnet,
dass das Gehäuse (4) des Kontaktsteckers (1) mindestens einen Führungskanal (9) zur Aufnahme mindestens eines Lichtwellenleiters aufweist, wobei am Gehäuse (4) des Kontaktsteckers (1) ein, zum Zusammenwirken mit den Verriegelungsmitteln der Steckeraufnahme bestimmter, aus mindestens einem zweiarmigen Hebel bestehender Entriegelungsmechanismus (5, 6, 7) angeordnet ist, der zusammen mit dem Gehäuse (4) einstückig ist.

2. Kontaktstecker nach Anspruch 1, dadurch gekennzeichnet, dass der Führungskanal (9) in einen erweiterten, einen Knickschutz für die Lichtwellenleiter bildenden Teil (9') ausmündet.

3. Kontaktstecker nach Anspruch 1, dadurch gekennzeichnet, dass der Entriegelungsmechanismus eine am Gehäuse (4) des Kontaktsteckers (1) angelenkte und von außen betätigbare Hebelanordnung umfasst, die aus mindestens einem zweiarmigen Hebel (5, 6) besteht, dessen innerer Arm im Verbindungszustand des Kontaktsteckers (1) mit der Steckeraufnahme (3) eine deren Verriegelungsmitteln (2) untergreift, wobei die zweiarmigen Hebel (5, 6) über je einen elastischen Steg (7) oder eine elastische Wippe kippbar am Gehäuse (4) angeformt sind.

4. Kontaktstecker, bei dem die Anschlussenden der Lichtwellenleiter je in einer Ferrule (8) enden, die vom Gehäuse (4) des Kontaktsteckers (1) umgeben ist, nach Anspruch 1, dadurch gekennzeichnet, dass die Ferrule (8) mit dem Gehäuse (4) des Kontaktsteckers (1) einstückig geformt ist.

5. Kontaktstecker nach Anspruch 1, dadurch gekennzeichnet, dass die Ferrule (8) starr oder gefedert mit dem Gehäuse (4) verbunden ist.
